# EUROPÄISCHE PATENTSCHRIFT

(11) **EP 3 775 702 B1**
(45) Veröffentlichungstag und Bekanntmachung des Hinweises auf die Patenterteilung: **27.09.2023**
(21) Anmeldenummer: 19724246.4
(22) Anmeldetag: 09.04.2019
(51) Int. Cl.: F24D 3/14, F24D 3/16, E04B 9/24, F24F 5/00, E04B 9/00, E04B 9/04, E04B 9/18

(54) **DECKENSTRAHLPLATTEN-ANORDNUNG**
RADIANT CEILING PANEL ARRANGEMENT
AGENCEMENT D'UN PANNEAU RADIANT DE PLAFOND

(30) Priorität: 10.04.2018 CH 4602018
(43) Veröffentlichungstag der Anmeldung: 17.02.2021
(73) Patentinhaber: Zehnder Group International AG, 5722 Gränichen (CH)
(72) Erfinder: HOLZWARTH, Jörg, 77974 Meißenheim/Kürzell (DE)
(74) Vertreter: Rentsch Partner AG
(86) Internationale Anmeldenummer: PCT/IB2019/052921
(87) Internationale Veröffentlichungsnummer: WO 2019/197991

(56) Entgegenhaltungen:
- EP-A2- 0 733 866
- DE-A1-102013 102 423
- DE-U1- 9 116 027
- GB-A- 971 025
- US-A- 2 587 884

## Beschreibung

Die Erfindung bezieht sich auf eine Deckenstrahlplatten-Anordnung zur Anbringung im Deckenbereich eines Raumes.

Deckenplatten und deren thermische Aktivierung, d.h. sog. Deckenstrahlplatten, sind an sich bekannt.

Die DE9116027U1, zeigt eine Kühldecke zur Raumluftklimatisierung, mit einem von Kühlwasser durchströmten Rohrsystem, das zumindest bereichsweise zwischen der Rohdecke eines Gebäudes und durch Träger abgehängten Deckenelementen vorgesehen und über ein mit einem der Träger und den Deckenelementen verbundenes Halteglied in Einbaulage gehalten ist, dadurch gekennzeichnet, dass das Halteglied als zumindest einen Bereich eines Kühlrohres und zumindest ein Deckenelement in jeweiligen Formausnehmungen im unteren Randbereich festlegender Rastträger ausgebildet ist, wobei die Formausnehmungen einander derart zugeordnet sind, dass der plattenförmige Innenflächenbereich des bzw. der Deckenelemente unter elastischer Vorspannung mit der Unterseite des, beziehungsweise der Kühlrohre in Berührungseingriff steht.

Die GB971025A zeigt eine kombinierte Beleuchtungs- und Heizungsanlage. Die Heizungsanlage umfasst einen Träger, der mindestens einen langgestreckten Heizer und mindestens eine langgestreckte Beleuchtungseinrichtung trägt, wobei zwischen dem Träger und dem Heizer und/oder der Beleuchtungseinrichtung Mittel vorgesehen sind, um die relative Ausdehnung in Längsrichtung während des Betriebs aufzunehmen.

Deckenplatten werden über Aufhängungskonstruktionen oder Montagekonstruktionen z.B. an Beton- oder Holzdecken abgehängt oder feststehend montiert. Die sog. Aktivierung von Deckenplatten, d.h. das Anbringen eines Moduls zum Heizen oder Kühlen der Deckenplatte, kann z.B. mittels eines Rohrregisters erfolgen, in welchem ein Wärmeträgerfluid transportiert wird, das mit der Deckenplatte in thermischem Kontakt steht. Alternativ kann die thermische

Aktivierung elektrisch-resistiv erfolgen. Deckenstrahlplatten können je nach Temperatur des Wärmeträgerfluids bezogen auf die räumlich durchschnittliche Gleichgewichtstemperatur des Raumes unterhalb der Deckenstrahlplatten sowohl zum Heizen (durch Emission von Strahlung) als auch zum Kühlen (durch Absorption von Strahlung) eines Raumes verwendet werden.

In den meisten Fällen ist man bestrebt, zusätzlich zur Heiz- und/oder Kühlfunktion derartiger Deckenstrahlplatten auch noch eine weitere Funktion, wie z.B. Beleuchten des Raumes, an der Decke bereitzustellen. Dies kann sehr aufwändig sein.

Der Erfindung liegt die Aufgabe zugrunde, bei Deckenstrahlplatten zusätzlich zur Heiz- und/oder Kühlfunktion eine weitere Funktion ohne grossen Aufwand bereitzustellen.

Zur Lösung der Aufgabe stellt die Erfindung eine **Deckenstrahlplatten-Anordnung** mit den Merkmalen des Patentanspruchs 1 bereit. Die Deckenstrahlplatten-Anordnung zur Anbringung im Deckenbereich eines Raumes weist mindestens eine erste Deckenstrahlplatte und eine zweite Deckenstrahlplatte zum Heizen und/oder Kühlen des Raumes sowie mindestens ein weiteres Funktionselement auf. Das mindestens eine weitere Funktionselement ist zwischen den mindestens zwei Deckenstrahlplatten angeordnet.

Erfindungsgemäss hält mindestens ein Verbindungselement die beiden Deckenstrahlplatten und das weitere Funktionselement zusammen.

Gemäss der Erfindung sind die beiden Deckenstrahlplatten und das weitere Funktionselement mittels des mindestens einen Verbindungselements miteinander starr verbunden.

Dadurch erhält man eine versteifte Deckenstrahlplatten-Anordnung, welche eine erste Deckenstrahlplatte, eine zweite Deckenstrahlplatte und ein dazwischen angeordnetes weiteres Funktionselement aufweist. Diese versteifte Deckenstrahlplatten-Anordnung kann dann als eine Einheit an einer Decke aufgehängt werden.

Vorzugsweise erstreckt sich zwischen der ersten Deckenstrahlplatte und dem weiteren Funktionselement ein erster Grenzbereich und zwischen der zweiten Deckenstrahlplatte und dem weiteren Funktionselement ein zweiter Grenzbereich, wobei sich das mindestens eine Verbindungselement brückenartig oder klammerartig über den ersten Grenzbereich und den zweiten Grenzbereich erstreckt.

Der erste und/oder der zweite Grenzbereich können jeweils ein Spalt sein. Je nach der Dimensionierung des mindestens einen Verbindungselements kann dieser Spalt im Grenzbereich unterschiedlich breit sein. Insbesondere kann der jeweilige Spalt eine Spaltbreite von Null haben, d.h. die erste Deckenstrahlplatte und die zweite Deckenstrahlplatte kontaktieren mit jeweils einer ihrer Längsseiten eine der beiden Längsseiten des weiteren Funktionselements.

Vorzugsweise enthält die Anordnung mindestens zwei Verbindungselemente, die entlang des ersten Grenzbereichs und entlang des zweiten Grenzbereichs voneinander beabstandet angeordnet sind. Dadurch erhält man ein gute Steifigkeit der so gebildeten dreiteiligen Einheit.

Bei einer **besonders vorteilhaften Ausführung** der erfindungsgemässen Deckenstrahlplatten-Anordnung enthält das mindestens eine Verbindungselement bzw. enthalten sämtliche Verbindungselemente jeweils einen ersten Eingriffsbereich für einen Eingriff mit einem zum ersten Eingriffsbereich komplementären Eingriffsbereich der ersten Deckenstrahlplatte; einen zweiten Eingriffsbereich für einen Eingriff mit einem zum zweiten Eingriffsbereich komplementären Eingriffsbereich der zweiten Deckenstrahlplatte; und einen dritten Eingriffsbereich für einen Eingriff mit einem zum dritten Eingriffsbereich komplementären Eingriffsbereich des mindestens einen weiteren Funktionselements.

Vorzugsweise enthält die Deckenstrahlplatten-Anordnung dabei nur eine erste Deckenstrahlplatte, nur eine zweite Deckenstrahlplatte und nur ein einziges weiteres Funktionselement.

Vorzugsweise sind der erste Eingriffsbereich, der zweite Eingriffsbereich und der dritte Eingriffsbereich mit ihrem jeweiligen komplementären Eingriffsbereich drehfest verbunden. Dies trägt zur Steigerung der Steifigkeit der Deckenstrahlplatten-Anordnung bei.

Vorzugsweise hat das zwischen den beiden Deckenstrahlplatten angeordnete weitere Funktionselement eine höhere Steifigkeit, insbesondere eine höhere Biegesteifigkeit und eine höhere Torsionssteifigkeit, als jede der beiden Deckenstrahlplatten, welche mit dem Funktionselement in Eingriff sind. Auch dies trägt zur Steigerung der Steifigkeit der Deckenstrahlplatten-Anordnung bei.

Zweckmässigerweise hat das weitere Funktionselement ein längliches Gehäuse mit einer Längsachse, wobei das Funktionselement vorzugsweise dieselbe Länge wie die beiden angrenzenden Deckenstrahlplatten hat.

Vorzugsweise hat das längliche Gehäuse zumindest in axialen Teilbereichen entlang seiner Längsachse eine Querschnittsform, deren äussere Begrenzung zumindest in Teilbereichen den komplementären Eingriffsbereich des mindestens einen weiteren Funktionselements bildet. Dadurch können die Verbindungselemente mit ihrem jeweiligen dritten Eingriffsbereich reiterartig auf dem länglichen Gehäuse in Eingriff gebracht werden. Besonders vorteilhaft ist dabei, wenn an allen drei Eingriffsbereichen der Verbindungselemente ein drehfester Eingriff vorliegt.

Zweckmässigerweise ist jede der beiden Deckenstrahlplatten ein längliches Gebilde mit einer jeweiligen Längsachse.

Vorzugsweise haben dabei die beiden länglichen Gebilde zumindest in axialen Teilbereichen entlang ihrer jeweiligen Längsachse eine Leiste oder einen Falz, welche bzw. welcher sich parallel zur jeweiligen Längsachse erstreckt, wobei die Leiste bzw. der Falz eine Querschnittsform hat, deren äussere Begrenzung zumindest in Teilbereichen den komplementären Eingriffsbereich der ersten Deckenstrahlplatte bzw. den komplementären Eingriffsbereich der zweiten Deckenstrahlplatte bildet.

Ein weiteres Funktionselement kann ein Leuchtelement, z.B. eine Gasentladungsröhre und/oder Leuchtdioden, zur Beleuchtung des Raumes enthalten.

Ein weiteres Funktionselement kann ein Kanalelement für den Transport von Luft enthalten.

Ein weiteres Funktionselement kann ein Filterelement zum Filtern von Luft enthalten.

Vorzugsweise haben dabei alle weiteren Funktionselemente unabhängig von der Art ihrer Funktion dasselbe Gehäuse. Dies hat den Vorteil, dass immer dieselbe Art von Verbindungselementen bei verschiedenen Funktionskombinationen in einer Deckenstrahlplatten-Anordnung verwendet werden können.

Damit kann die erfindungsgemässe Deckenstrahlplatten-Anordnung eine Multifunktions-Einheit darstellen, welche neben der Heizfunktion und/oder Kühlfunktion der beiden Deckenstrahlplatten auch noch eine Beleuchtungsfunktion, eine Ventilationsfunktion, eine Luftverteilungsfunktion und eine Luftreinigungsfunktion aufweist.

Bei einer **weiteren besonders vorteilhaften Ausführung** der erfindungsgemässen Deckenstrahlplatten-Anordnung ist das mindestens eine Verbindungselement aus einem Blech durch Ausstanzen oder Ausschneiden eines einstückigen bzw. zusammenhängenden zweidimensionalen Blechauschnitts aus dem Blech und anschliessendes Biegen des Blechauschnitts zu einem dreidimensionalen Gebilde mit zwei zueinander parallelen Biegekanten gefertigt.

Ein derartiges Verbindungselement kann kostengünstig z.B. aus Stahlblech in nur zwei Verarbeitungsschritten hergestellt werden: ein erster Schritt zum Ausstanzen oder Ausschneiden, z.B. Laserschneiden; und ein zweiter Schritt zum Biegen bzw. Abkanten des Blechausschnitts entlang zweier geradliniger Biegelinien.

Vorzugsweise hat der zweidimensionale Blechausschnitt einen etwa rechteckförmigen zentralen Bereich, von welchem sich jeweils ausgehend von einem der vier Eckbereiche des rechteckförmigen zentralen Bereichs jeweils ein Befestigungs-Schenkel schräg zu den Hauptachsen des rechteckförmigen zentralen Bereichs weg erstreckt.

Vorzugsweise verlaufen die beiden parallelen Biegekanten des dreidimensionalen Gebildes parallel zur grossen Hauptachse des rechteckförmigen zentralen Bereichs.

Vorzugsweise enthält der rechteckförmige zentrale Bereich des Verbindungselements einen Brückenbereich, welcher ein U-Profil mit einer Basis und zwei zueinander parallelen U-Profil-Schenkeln aufweist.

Dieser Brückenbereich in Form eines U-Profils verleiht dem Verbindungselement eine hohe Steifigkeit.

Vorzugsweise hat der erste U-Profil-Schenkel am ersten Ende des Brückenbereichs einen ersten Befestigungs-Schenkel und am zweiten Ende des Brückenbereichs einen zweiten Befestigungs-Schenkel und hat der zweite U-Profil-Schenkel am zweiten Ende des Brückenbereichs einen dritten Befestigungs-Schenkel und am ersten Ende des Brückenbereichs einen vierten Befestigungs-Schenkel.

Vorzugsweise sind die vier Befestigungsschenkel jeweils ebene Gebilde, wobei der erste und der zweite Befestigungs-Schenkel in einer ersten Ebene liegen und der dritte und der vierte Befestigungs-Schenkel in einer zweiten Ebene liegen, welche zur ersten Ebene parallel verläuft. Vorzugsweise liegt die erste der beiden Biegekanten in der ersten Ebene und die zweite der beiden Biegekanten in der zweiten Ebene.

Vorzugsweise enthalten die Endbereiche des ersten und des vierten Befestigungsschenkels den ersten Eingriffsbereich für einen Eingriff mit einem zum ersten Eingriffsbereich komplementären Eingriffsbereich der ersten Deckenstrahlplatte.

Vorzugsweise enthalten die Endbereiche des zweiten und des dritten Befestigungsschenkels den zweiten Eingriffsbereich für einen Eingriff mit einem zum zweiten Eingriffsbereich komplementären Eingriffsbereich der zweiten Deckenstrahlplatte.

Vorzugsweise enthält der der Brückenbereich den dritten Eingriffsbereich für einen Eingriff mit einem zum dritten Eingriffsbereich komplementären Eingriffsbereich des mindestens einen weiteren Funktionselements.

Vorzugsweise haben die die ersten und die zweiten Eingriffsbereiche jeweils eine Aussparung im jeweiligen Endbereich des Befestigungs-Schenkels, welche durch eine umbiegbare Lasche geöffnet und geschlossen werden kann.

Vorzugsweise sind der erste Eingriffsbereich und der zweite Eingriffsbereich des ersten Verbindungselements jeweils durch eine Aussparung und eine umbiegbare Lasche gebildet.

Vorzugsweise sind der erste Eingriffsbereich und der zweite Eingriffsbereich des zweiten Verbindungselements jeweils durch eine Aussparung und eine umbiegbare Lasche gebildet.

Vorzugsweise sind der komplementäre Eingriffsbereich der ersten Deckenstrahlplatte durch einen Falz gebildet.

Vorzugsweise sind der komplementäre Eingriffsbereich der zweiten Deckenstrahlplatte durch einen Falz gebildet.

Vorzugsweise sind der dritte Eingriffsbereich des ersten Verbindungselements und der dritte Eingriffsbereich des zweiten Verbindungselements jeweils durch eine Aussparung zwischen den Schenkeln des jeweiligen Verbindungselements gebildet. Vorzugsweise ist der komplementäre Eingriffsbereich des weiteren Funktionselements durch eine zur Aussparung komplementäre Aussenkontur des Gehäuses des weiteren Funktionselements und eine Längsnut in dem weiteren Funktionselement gebildet, wobei die Längsnut V vorzugsweise beidseitige Hinterschneidungen aufweist.

Vorzugsweise sind das erste Verbindungselement und das zweite Verbindungselement jeweils mittels einer Klemmvorrichtung mit dem weiteren Funktionselement veklemmbar bzw. verklemmt.

Vorzugsweise hat die jeweilige Klemmvorrichtung hierfür einen Gewindestift, welcher an seinem ersten Ende einen in die beiden Hinterschneidungen der Längsnut ragenden plattenartigen oder scheibenartigen Sockel enthält.

Vorzugsweise hat der Gewindestift an seinem durch ein jeweiliges Durchgangsloch des ersten Verbindungselements und des zweiten Verbindungselements ragenden zweiten Ende eine Mutter zum Festklemmen bzw. Spannen der Klemmvorrichtung.

Weitere Vorteile, Merkmale und Anwendungsmöglichkeiten der Erfindung ergeben sich aus der nun folgenden, nicht einschränkend aufzufassenden Beschreibung anhand der Zeichnung, in welcher ein bevorzugtes Ausführungsbeispiel der Erfindung beschrieben und gezeigt ist, wobei
**Fig. 1** eine Perspektivansicht eines Abschnitts des Ausführungsbeispiels der erfindungsgemässen Deckenstrahlplatten-Anordnung mit zwei Deckenstrahlplatten und einem weiteren Funktionselement ist;
**Fig. 2A** eine Perspektivansicht zweier verschiedener Aufhängungsmittel zum Aufhängen der erfindungsgemässen Deckenstrahlplatten-Anordnung an einer Decke ist;
**Fig. 2B** eine Endansicht mit Blickrichtung entlang der Längsachse der Deckenstrahlplatten-Anordnung ist;
**Fig. 2C** eine Endansicht mit Blickrichtung entlang der Längsachse der Deckenstrahlplatten-Anordnung mit zwei weiteren Deckenstrahlplatten ist;
**Fig. 3** eine Perspektivansicht von zwei in Serie geschalteten Deckenstrahlplatten-Anordnungen gemäss dem Ausführungsbeispiel von Fig. 1 ist;
**Fig. 4** eine Perspektivansicht der Aufhängungsmittel zum Aufhängen der erfindungsgemässen Deckenstrahlplatten-Anordnung an einer Decke ist;
**Fig. 5** eine Perspektivansicht der Aufhängungsmittel der Fig. 4 mit einem Teil (zwei Deckenstrahlplatten) der daran aufgehängten Deckenstrahlplatten-Anordnung ist;
**Fig. 6A** eine Perspektivansicht der Aufhängungsmittel der Fig. 4 mit der gesamten daran aufgehängten Deckenstrahlplatten-Anordnung (zwei Deckenstrahlplatten und ein weiteres Funktionselement) ist;
**Fig. 6B** eine Draufsicht der Aufhängungsmittel der Fig. 4 mit der gesamten daran aufgehängten Deckenstrahlplatten-Anordnung (zwei Deckenstrahlplatten und ein weiteres Funktionselement) ist;
**Fig. 7A** einen ersten Schritt des Zusammenbaus der erfindungsgemässen Deckenstrahlplatten-Anordnung zeigt;
**Fig. 7B** einen zweiten Schritt des Zusammenbaus der erfindungsgemässen Deckenstrahlplatten-Anordnung zeigt;
**Fig. 7C** einen dritten Schritt zwischen einem ersten Zustand und einem zweiten Zustand des Zusammenbaus der erfindungsgemässen Deckenstrahlplatten-Anordnung zeigt; und
**Fig. 8A** eine erste Seitenansicht (entsprechend der Blickrichtung von Fig. 2) eines Verbindungselements der erfindungsgemässen Deckenstrahlplatten-Anordnung ist;
**Fig. 8B** eine zweite Seitenansicht (senkrecht der Blickrichtung von Fig. 2) des Verbindungselements der erfindungsgemässen Deckenstrahlplatten-Anordnung ist;
**Fig. 8C** eine Draufsicht (senkrecht der Blickrichtung von Fig. 2) des Verbindungselements der erfindungsgemässen Deckenstrahlplatten-Anordnung ist; und
**Fig. 8D** eine Perspektivansicht des Verbindungselements der erfindungsgemässen Deckenstrahlplatten-Anordnung ist.

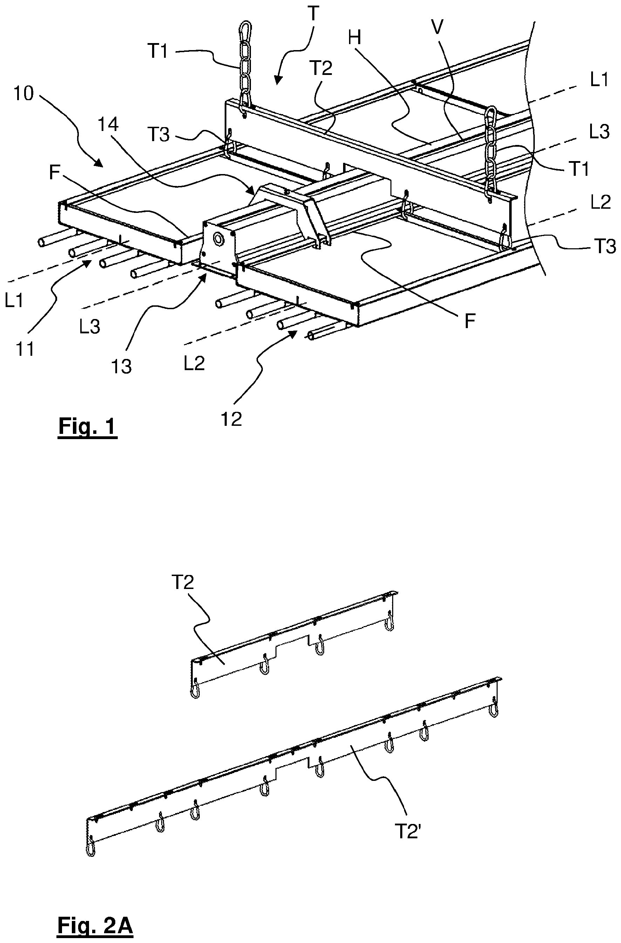

In **Fig. 1** erkennt man eine **Deckenstrahlplatten-Anordnung** 10 zur Anbringung im Deckenbereich eines Raumes. Die Anordnung 10 enthält eine erste Deckenstrahlplatte 11 und eine zweite Deckenstrahlplatte 12 zum Heizen und/oder Kühlen des Raumes sowie ein weiteres Funktionselement 13. Das weitere Funktionselement 13 ist zwischen den beiden Deckenstrahlplatten 11, 12 angeordnet. Ein erstes Verbindungselement 14 und ein zweites Verbindungselement 15 halten die beiden Deckenstrahlplatten 11, 12 und das weitere Funktionselement 13 zusammen. Dabei sind die beiden Deckenstrahlplatten 11, 12 und das weitere Funktionselement 13 miteinander starr verbunden. Die beiden entlang der Axialrichtung bzw. Längsrichtung der beiden Deckenstrahlplatten beabstandet angeordneten Verbindungselemente 14, 15 sorgen für eine Verbindung der beiden Deckenstrahlplatten 11, 12 und des weiteren Funktionselements 13 miteinander und für eine Versteifung des aus diesen Elementen 11, 12, 13 zusammengesetzten Gebildes.

Das weitere Funktionselement 13 hat ein längliches Gehäuse H mit einer Längsachse L3. Das längliche Gehäuse H hat in axialen Teilbereichen entlang seiner Längsachse L3 eine Querschnittsform, deren äussere Begrenzung den komplementären Eingriffsbereich 13KG des weiteren Funktionselements 13 bildet.

Jede der beiden Deckenstrahlplatten 11, 12 ist ein längliches Gebilde mit einer Längsachse L1 bzw. einer Längsachse L2. Die beiden länglichen Gebilde haben entlang ihrer jeweiligen Längsachse L1 bzw. L2 eine Leiste oder einen Falz F, welche bzw. welcher sich parallel zur jeweiligen Längsachse L1 bzw. L2 erstreckt. Die Leiste bzw. der Falz F hat eine Querschnittsform, deren äussere Begrenzung den komplementären Eingriffsbereich 11 KE der ersten Deckenstrahlplatte 11 bzw. den komplementären Eingriffsbereich 12KF der zweiten Deckenstrahlplatte 12 bildet.

Das weitere Funktionselement 13 enthält ein Leuchtelement, z.B. eine Gasentladungsröhre oder eine Leuchtdioden-Anordnung, zur Beleuchtung des Raumes. Ergänzend oder alternativ kann das weitere Funktionselement 13 ein Kanalelement für den Transport von Luft und/oder ein Filterelement zum Filtern von Luft enthalten.

Die Deckenstrahlplatten-Anordnung 10 ist über mindestens zwei entlang der Längsrichtung der Anordnung 10 beabstandete Aufhängungsmittel T an einer (nicht gezeigten) Decke aufgehängt. Jedes Aufhängungsmittel T enthält zwei Ketten T1, die von der Decke herunterragen und an denen eine Querleiste T2 aufgehängt ist. Die Deckenstrahlplatten-Anordnung 10 ist an jeder Querleiste T2 über vier entlang der Querrichtung der Anordnung 10 beabstandete Haken bzw. Karabiner T3 aufgehängt.

In **Fig. 2A** ist eine Perspektivansicht zweier verschiedener Aufhängungsmittel zum Aufhängen der erfindungsgemässen Deckenstrahlplatten-Anordnung 10 an einer Decke gezeigt. Man erkennt eine kürzere Querleiste T2 zur Aufhängung eines schmaleren Aufbaus aus Deckenstrahlplatten und eine längere Querleiste T2' zur Aufhängung eines breiteren Aufbaus aus Deckenstrahlplatten.

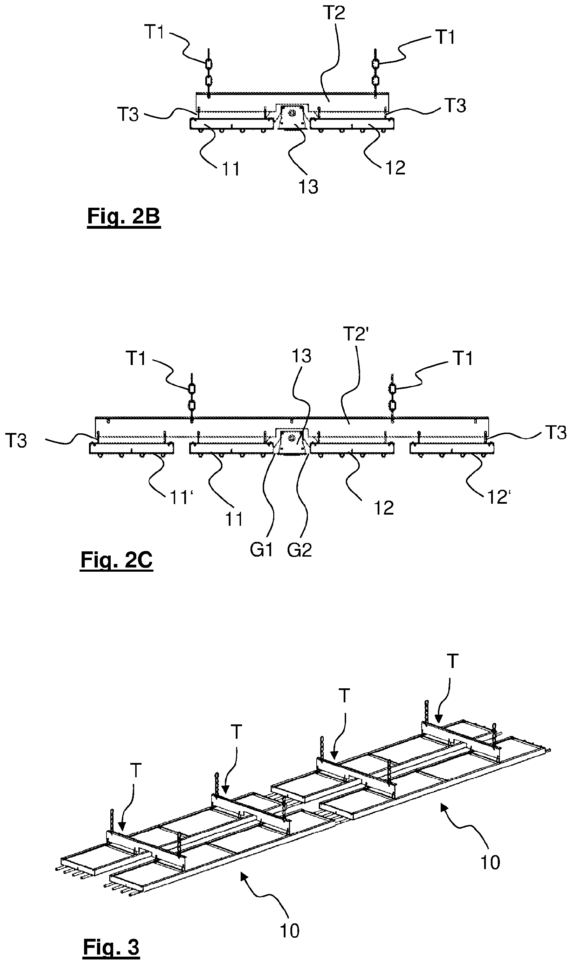

In **Fig. 2B** ist eine Endansicht mit Blickrichtung entlang der Längsachse der Deckenstrahlplatten-Anordnung 10 bzw. entlang der Längsachsen L1, L2 und L3 der beiden Deckenstrahlplatten 11 und 12 sowie dem weiteren Funktionselement 13 der Deckenstrahlplatten-Anordnung 10 gezeigt. Man erkennt ausserdem die Ketten T1, die kürzere Querleiste T2 und die Karabiner T3.

In **Fig. 2C** ist eine Endansicht mit Blickrichtung entlang der Längsachse der Deckenstrahlplatten-Anordnung bzw. entlang der Längsachsen L1, L2 und L3 der beiden Deckenstrahlplatten 11 und 12 sowie dem weiteren Funktionselement 13 mit zwei weiteren Deckenstrahlplatten 11' und 12' gezeigt. Man erkennt ausserdem die Ketten T1, eine längere Querleiste T2' und die Karabiner T3.

In **Fig. 3** ist eine Perspektivansicht von zwei in Serie geschalteten Deckenstrahlplatten-Anordnungen 10 gezeigt, die jeweils mit zwei Aufhängungsmitteln T aufgehängt sind.

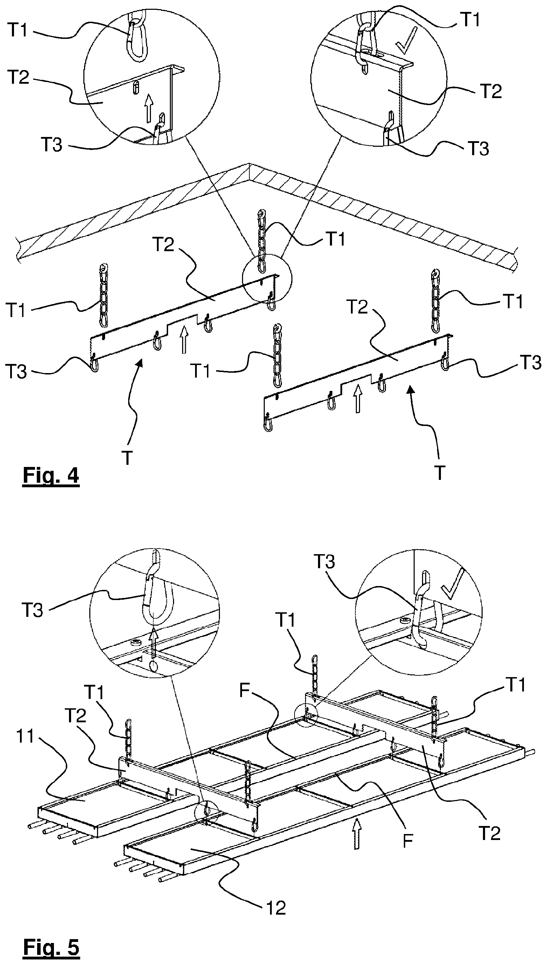

In **Fig. 4** ist eine Perspektivansicht zweier Aufhängungsmittel T zum Aufhängen der erfindungsgemässen Deckenstrahlplatten-Anordnung 10 an einer Decke gezeigt. Man erkennt die Ketten T1, die Querleiste T2 und die Karabiner T3 des jeweiligen Aufhängungsmittels T.

In **Fig. 5** ist eine Perspektivansicht der Aufhängungsmittel der Fig. 4 mit einem Teil, d.h. den beiden Deckenstrahlplatten 11 und 12, der daran aufgehängten Deckenstrahlplatten-Anordnung 10 gezeigt. Man erkennt jeweils den Falz F der beiden Deckenstrahlplatten 11 und 12 sowie die beiden Aufhängungsmittel T mit den jeweiligen Ketten T1, der jeweiligen Querleiste T2 und den jeweiligen Karabinern T3.

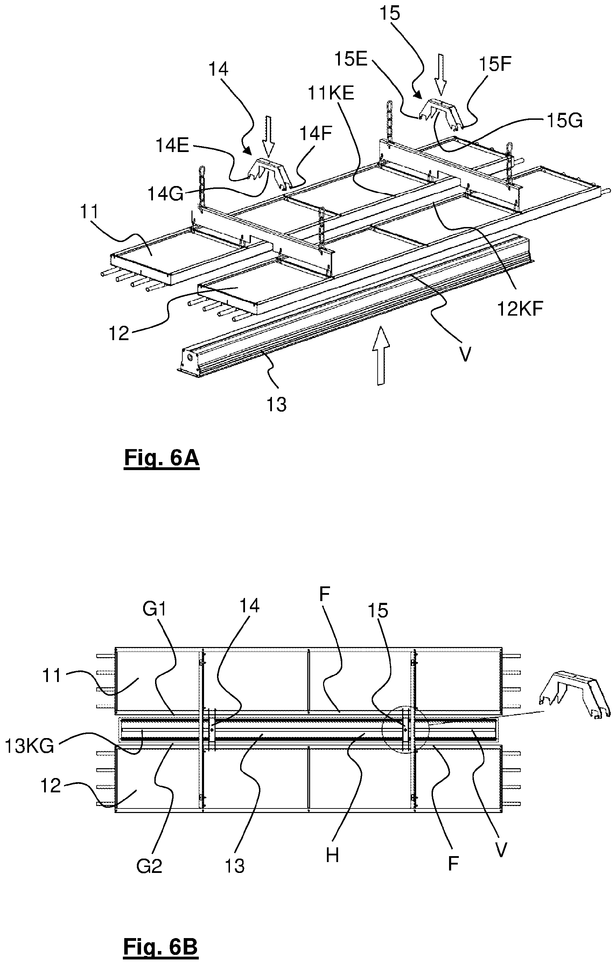

In **Fig. 6A** und **Fig. 6B** erkennt man, dass das Verbindungselement 14 bzw. 15 folgende Bereiche aufweist:
einen ersten Eingriffsbereich 14E bzw. 15E für einen Eingriff mit einem zum ersten Eingriffsbereich komplementären Eingriffsbereich 11 KE der ersten Deckenstrahlplatte 11;
einen zweiten Eingriffsbereich 14F bzw. 15F für einen Eingriff mit einem zum zweiten Eingriffsbereich komplementären Eingriffsbereich 12KF der zweiten Deckenstrahlplatte 12; und
einen dritten Eingriffsbereich 14G bzw. 15G für einen Eingriff mit einem zum dritten Eingriffsbereich komplementären Eingriffsbereich 13KG des weiteren Funktionselements 13.

Wie man am besten in **Fig. 6B** erkennt, erstreckt sich zwischen der ersten Deckenstrahlplatte 11 und dem Funktionselement 13 ein erster Grenzbereich G1 und zwischen der zweiten Deckenstrahlplatte 12 und dem Funktionselement 13 ein zweiter Grenzbereich G2. Die beiden Verbindungselemente 14, 15 erstrecken sich brückenartig oder klammerartig über den ersten Grenzbereich G1 und den zweiten Grenzbereich G2. Die beiden Verbindungselemente 14, 15 sind entlang des ersten Grenzbereichs G1 und entlang des zweiten Grenzbereichs G2 voneinander beabstandet angeordnet.

Wie man am besten in **Fig. 6A****,** **Fig. 7C** **und** **Fig. 8D** erkennt,
- sind der erste Eingriffsbereich 14E und der zweite Eingriffsbereich 14F des ersten Verbindungselements 14 jeweils durch eine Aussparung N und eine umbiegbare Lasche M gebildet;
- sind der erste Eingriffsbereich 15E und der zweite Eingriffsbereich 15F des zweiten Verbindungselements 15 jeweils durch eine Aussparung N und eine umbiegbare Lasche M gebildet;
- sind der komplementäre Eingriffsbereich 11KE der ersten Deckenstrahlplatte 11 durch einen Falz F gebildet; und
- sind der komplementäre Eingriffsbereich 12KF der zweiten Deckenstrahlplatte 12 durch einen Falz F gebildet.

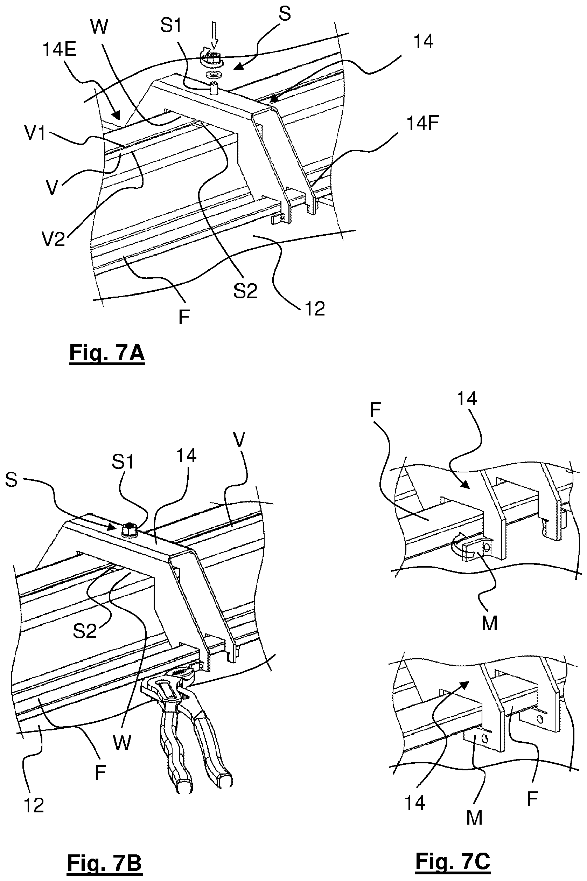

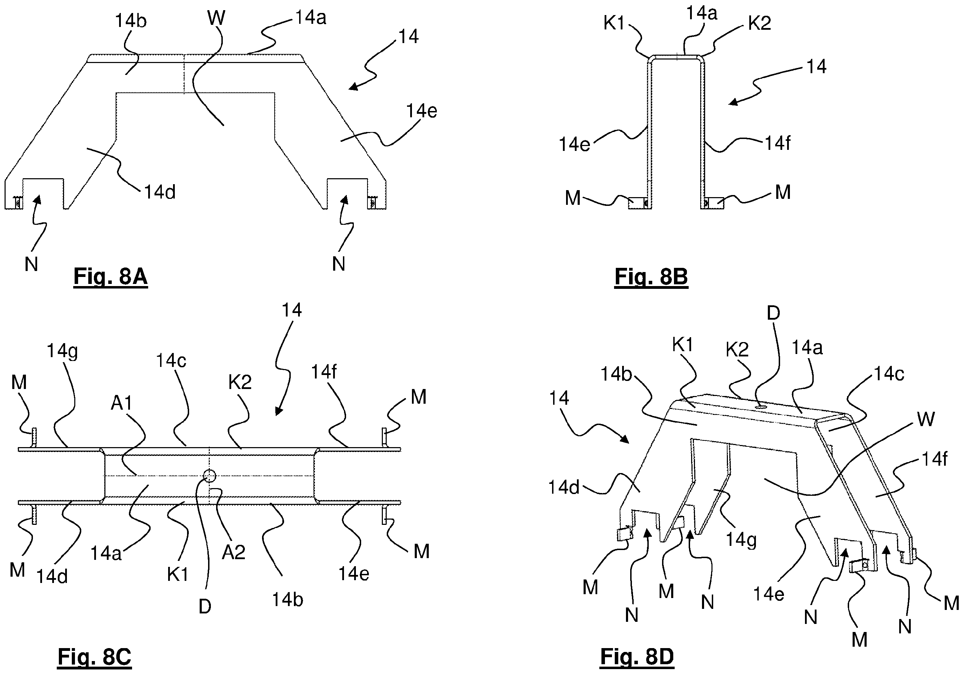

Wie man am besten in **Fig. 7A, Fig. 7B****,** **Fig. 8A und Fig. 8D** erkennt,
- sind der dritte Eingriffsbereich 14G des ersten Verbindungselements 14 und der dritte Eingriffsbereich 15G des zweiten Verbindungselements 15 jeweils durch eine Aussparung W zwischen den Schenkeln 14d, 14e, 14f, 14g des Verbindungselements 14 bzw. den entsprechenden (nicht gezeigten Schenkeln) des Verbindungselements 15 gebildet;
- sind der komplementäre Eingriffsbereich 13KG des weiteren Funktionselements 13 durch eine zur Aussparung W komplementäre Aussenkontur des Gehäuses H des weiteren Funktionselements 13 und eine Längsnut V in dem weiteren Funktionselement 13 gebildet, wobei die Längsnut V beidseitige Hinterschneidungen V1 und V2 aufweist;
wobei das erste Verbindungselement 14 und das zweite Verbindungselement 15 jeweils mittels einer Klemmvorrichtung S mit dem weiteren Funktionselement 13 veklemmbar bzw. verklemmt sind, wobei die jeweilige Klemmvorrichtung S hierfür einen Gewindestift S1 aufweist, welcher an seinem ersten Ende einen in die Hinterschneidungen V1 und V2 der Längsnut V ragenden plattenartigen oder scheibenartigen Sockel S2 aufweist und welcher an seinem durch ein jeweiliges Durchgangsloch D des ersten Verbindungselements 14 und des zweiten Verbindungselements 15 ragenden zweiten Ende eine Mutter S3 zum Festklemmen bzw. Spannen der Klemmvorrichtung S aufweist.

In **Fig. 7A** ist ein erster Schritt des Zusammenbaus der erfindungsgemässen Deckenstrahlplatten-Anordnung 10 gezeigt. Man erkennt, wie das Verbindungselement 14 mit dem Falz F einer Deckenstrahlplatte 11 in Eingriff gebracht wird.

In **Fig. 7B** ist ein zweiter Schritt des Zusammenbaus der erfindungsgemässen Deckenstrahlplatten-Anordnung 10 gezeigt. Man erkennt (siehe auch Fig. 8D), wie eine von dem Verbindungselement 14 weg ragende Lasche M umgebogen wird, wodurch eine formschlüssige Verbindung zwischen einem Schenkel des Verbindungselements 14 und dem Falz F erzeugt wird.

In **Fig. 7C** ist der zweite Schritt zwischen einem ersten Zustand (1) und einem zweiten Zustand (2) des Zusammenbaus der erfindungsgemässen Deckenstrahlplatten-Anordnung 10 vergrössert gezeigt. Man erkennt den durch das Umbiegen der Lasche M erzeugten Übergang von dem Zustand (1), in welchem die Lasche M von dem Verbindungselement 14 weg ragt, zu dem Zustand (2), in welchem die Lasche M um etwa 90° umgebogen ist und von dem Verbindungselement 14 nicht mehr weg ragt.

In **Fig. 8A, Fig. 8B, Fig. 8C und Fig. 8D** erkennt man, dass das das Verbindungselement 14 aus einem Blech durch Ausstanzen oder Ausschneiden eines einstückigen bzw. zusammenhängenden zweidimensionalen Blechauschnitts mit den Bereichen 14a, 14b, 14c, 14d, 14e, 14f, 14g aus dem Blech und anschliessendes Biegen des Blechauschnitts zu einem dreidimensionalen Gebilde mit den Bereichen 14a, 14b, 14c, 14d, 14e, 14f, 14g mit zwei zueinander parallelen Biegekanten K1, K2 gefertigt ist. Das Biegen des zweidimensionalen Blechausschnitts erfolgte entlang der beiden Biegekanten K1 und K2 um einen Winkel von etwa 90°. Der zweidimensionale Blechausschnitt hat einen etwa rechteckförmigen zentralen Bereich 14a, 14b, 14c, von welchem sich ausgehend von einem der vier Eckbereiche des rechteckförmigen zentralen Bereichs jeweils ein Befestigungs-Schenkel 14d, 14e, 14f, 14g schräg zu den Hauptachsen A1, A2 des rechteckförmigen zentralen Bereichs 14a, 14b, 14c weg erstreckt. Die beiden parallelen Biegekanten K1, K2 des dreidimensionalen Gebildes verlaufen parallel zur grossen Hauptachse A1 des rechteckförmigen zentralen Bereichs 14a, 14b, 14c. Der rechteckförmige zentrale Bereich 14a, 14b, 14c des Verbindungselements 14 bildet einen Brückenbereich 14a, 14b, 14c, welcher ein U-Profil mit einer Basis 14a und zwei zueinander parallelen U-Profil-Schenkeln 14b, 14c enthält.

Der erste U-Profil-Schenkel 14b hat am ersten Ende des Brückenbereichs 14a, 14b, 14c einen ersten Befestigungs-Schenkel 14d und am zweiten Ende des Brückenbereichs 14a, 14b, 14c einen zweiten Befestigungs-Schenkel 14e.

Der zweite U-Profil-Schenkel 14c hat am zweiten Ende des Brückenbereichs 14a, 14b, 14c einen dritten Befestigungs-Schenkel 14f und am ersten Ende des Brückenbereichs 14a, 14b, 14c einen vierten Befestigungs-Schenkel 14g.

Die vier Befestigungsschenkel 14d, 14e, 14f, 14g sind jeweils ebene Gebilde, wobei der erste und der zweite Befestigungs-Schenkel 14d, 14e in einer ersten Ebene liegen und der dritte und der vierte Befestigungs-Schenkel 14f, 14g in einer zweiten Ebene liegen, welche zur ersten Ebene parallel verläuft.

Die Endbereiche des ersten und des vierten Befestigungsschenkels 14d, 14g enthalten den ersten Eingriffsbereich 14E für einen Eingriff mit dem zum ersten Eingriffsbereich komplementären Eingriffsbereich 11KE der ersten Deckenstrahlplatte 11.

Die Endbereiche des zweiten und des dritten Befestigungsschenkels 14e, 14f enthalten den zweiten Eingriffsbereich 14F für einen Eingriff mit dem zum zweiten Eingriffsbereich komplementären Eingriffsbereich 12KF der zweiten Deckenstrahlplatte 12.

Der Brückenbereich 14a, 14b, 14c enthält den dritten Eingriffsbereich 14G für einen Eingriff mit dem zum dritten Eingriffsbereich komplementären Eingriffsbereich 13KG des weiteren Funktionselements 13.

Wie man am besten in **Fig. 6A** und in **Fig. 8D** erkennt, haben die ersten und die zweiten Eingriffsbereiche 14E, 15E, 14F, 15F der beiden Verbindungselement 14, 15 jeweils eine Aussparung N im jeweiligen Endbereich des Befestigungs-Schenkels 14d, 14e, 14f, 14g, welche durch eine umbiegbare Lasche M geöffnet und geschlossen werden kann.

### Bezugszeichenliste

- 10: Deckenstrahlplatten-Anordnung
- 11: erste Deckenstrahlplatte
- 12: zweite Deckenstrahlplatte
- 13: weiteres Funktionselement
- 14: erstes Verbindungselement
- 15: zweites Verbindungselement
- G1: erster Grenzbereich
- G2: zweiter Grenzbereich
- 14E: erster Eingriffsbereich des ersten Verbindungselements
- 15E: erster Eingriffsbereich des zweiten Verbindungselements
- 11KE: komplementärer Eingriffsbereich der ersten Deckenstrahlplatte
- 14F: zweiter Eingriffsbereich des ersten Verbindungselements
- 15F: zweiter Eingriffsbereich des zweiten Verbindungselements
- 12KF: komplementärer Eingriffsbereich der zweiten Deckenstrahlplatte
- 14G: dritter Eingriffsbereich des ersten Verbindungselements
- 15G: dritter Eingriffsbereich des zweiten Verbindungselements
- 13KG: komplementärer Eingriffsbereich des weiteren Funktionselements
- L1: Längsachse
- L2: Längsachse
- L3: Längsachse
- K1: Biegekante
- K2: Biegekante
- 14a,14b,14c: rechteckförmiger zentraler Bereich des zweidimensionalen Blechausschnitts **vor** dem Biegen
- 14a,14b,14c: Brückenbereich des ersten Verbindungselements; gebildet durch Blechausschnitt **nach** dem Biegen zum U-Profil
- 14a: U-Profil-Basis
- 14b: erster U-Profil-Schenkel
- 14c: zweiter U-Profil-Schenkel
- 14d: erster Befestigungsschenkel
- 14e: zweiter Befestigungsschenkel
- 14f: dritter Befestigungsschenkel
- 14g: vierter Befestigungsschenkel
- A1: erste Hauptachse des zweidimensionalen Blechausschnitts
- A2: zweite Hauptachse des zweidimensionalen Blechausschnitts
- F: Falz oder Leiste entlang der Längsachse L1, L2 einer Deckenstrahlplatte
- M: umgebogene bzw. umbiegbare Lasche der Schenkel 14d, 14e, 14f, 14g
- N: Aussparung im Endbereich der Schenkel 14d, 14e, 14f, 14g
- V: Längsnut des weiteren Funktionselements
- V1: erste Hinterschneidung der Längsnut
- V2: zweite Hinterschneidung der Längsnut
- W: Aussparung zwischen den Schenkeln 14d, 14e, 14f, 14g
- S: Klemmvorrichtung
- S1: Gewindestift
- S2: plattenartiger oder scheibenartigger Sockel
- D: Durchgangsloch in U-Profil-Basis
- T: Aufhängungsmittel
- T1: Kette
- T2: Querleiste, kurz
- T2': Querleiste, lang
- T3: Haken oder Karabiner

## Patentansprüche

1. Deckenstrahlplatten-Anordnung (10) zur Anbringung im Deckenbereich eines Raumes, wobei die Anordnung (10) mindestens eine erste Deckenstrahlplatte (11) und eine zweite Deckenstrahlplatte (12) zum Heizen und/oder Kühlen des Raumes sowie mindestens ein weiteres Funktionselement (13) aufweist, wobei das mindestens eine weitere Funktionselement (13) zwischen den mindestens zwei Deckenstrahlplatten (11, 12) angeordnet ist,
wobei mindestens ein Verbindungselement (14, 15) die beiden Deckenstrahlplatten (11, 12) und das weitere Funktionselement (13) zusammenhält, **dadurch gekennzeichnet dass** die beiden Deckenstrahlplatten (11, 12) und das weitere Funktionselement (13) mittels des mindestens einen Verbindungselements (14,15) starr verbunden sind.

2. Deckenstrahlplatten-Anordnung (10) nach Anspruch 1, **dadurch gekennzeichnet dass** sich zwischen der ersten Deckenstrahlplatte (11) und dem Funktionselement (13) ein erster Grenzbereich (G1) erstreckt und sich zwischen der zweiten Deckenstrahlplatte (12) und dem Funktionselement (13) ein zweiter Grenzbereich (G2) erstreckt, wobei sich das mindestens eine Verbindungselement (14, 15) brückenartig oder klammerartig über den ersten Grenzbereich (G1) und den zweiten Grenzbereich (G2) erstreckt, wobei die Anordnung (10) vorzugsweise mindestens zwei Verbindungselemente (14, 15) aufweist, die entlang des ersten Grenzbereichs (G1) und entlang des zweiten Grenzbereichs (G2) voneinander beabstandet angeordnet sind.

3. Deckenstrahlplatten-Anordnung (10) nach einem der Ansprüche 1 bis 2, **dadurch gekennzeichnet, dass** das Verbindungselement (14, 15) aufweist:
einen ersten Eingriffsbereich (14E, 15E) für einen Eingriff mit einem zum ersten Eingriffsbereich komplementären Eingriffsbereich (11KE) der ersten Deckenstrahlplatte (11);
einen zweiten Eingriffsbereich (14F, 15F) für einen Eingriff mit einem zum zweiten Eingriffsbereich komplementären Eingriffsbereich (12KF) der zweiten Deckenstrahlplatte (12); und
einen dritten Eingriffsbereich (14G, 15G) für einen Eingriff mit einem zum dritten Eingriffsbereich komplementären Eingriffsbereich (13KG) des mindestens einen weiteren Funktionselements (13).

4. Deckenstrahlplatten-Anordnung (10) nach einem der Ansprüche 1 bis 3, **dadurch gekennzeichnet, dass** das weitere Funktionselement (13) ein längliches Gehäuse (H) mit einer Längsachse L3 aufweist, wobei vorzugsweise das längliche Gehäuse (H) zumindest in axialen Teilbereichen entlang seiner Längsachse L3 eine Querschnittsform hat, deren äussere Begrenzung zumindest in Teilbereichen den komplementären Eingriffsbereich (13KG) des mindestens einen weiteren Funktionselements (13) bildet.

5. Deckenstrahlplatten-Anordnung (10) nach einem der Ansprüche 1 bis 4, **dadurch gekennzeichnet, dass** jede der beiden Deckenstrahlplatten (11, 12) ein längliches Gebilde mit einer Längsachse L1 bzw. einer Längsachse L2 ist, wobei vorzugsweise die beiden länglichen Gebilde zumindest in axialen Teilbereichen entlang ihrer jeweiligen Längsachse L1 bzw. L2 eine Leiste oder einen Falz (F) aufweisen, welche bzw. welcher sich parallel zur jeweiligen Längsachse L1 bzw. L2 erstreckt, wobei die Leiste bzw. der Falz (F) eine Querschnittsform hat, deren äussere Begrenzung zumindest in Teilbereichen den komplementären Eingriffsbereich (11KE) der ersten Deckenstrahlplatte (11) bzw. den komplementären Eingriffsbereich (12KF) der zweiten Deckenstrahlplatte (12) bildet.

6. Deckenstrahlplatten-Anordnung (10) nach einem der Ansprüche 1 bis 5, **dadurch gekennzeichnet, dass** ein weiteres Funktionselement (13) ein Leuchtelement, insbesondere eine Gasentladungsröhre oder Leuchtdioden, zur Beleuchtung des Raumes enthält; und/oder dass ein weiteres Funktionselement (13) ein Kanalelement für den Transport von Luft enthält; und/oder dass ein weiteres Funktionselement (13) ein Filterelement zum Filtern von Luft enthält.

7. Deckenstrahlplatten-Anordnung (10) nach einem der Ansprüche 1 bis 6, **dadurch gekennzeichnet, dass** das mindestens eine Verbindungselement (14, 15) aus einem Blech durch Ausstanzen oder Ausschneiden eines einstückigen bzw. zusammenhängenden zweidimensionalen Blechauschnitts (14a, 14b, 14c, 14d, 14e, 14f, 14g) aus dem Blech und anschliessendes Biegen des Blechauschnitts zu einem dreidimensionalen Gebilde (14a, 14b, 14c, 14d, 14e, 14f, 14g) mit zwei zueinander parallelen Biegekanten (K1, K2) gefertigt ist.

8. Deckenstrahlplatten-Anordnung (10) nach Anspruch 7, **dadurch gekennzeichnet, dass** der zweidimensionale Blechausschnitt einen etwa rechteckförmigen zentralen Bereich (14a, 14b, 14c) aufweist, von welchem sich jeweils ausgehend von einem der vier Eckbereiche des rechteckförmigen zentralen Bereichs jeweils ein Befestigungs-Schenkel (14d, 14e, 14f, 14g) schräg zu den Hauptachsen A1, A2 des rechteckförmigen zentralen Bereichs (14a, 14b, 14c) weg erstreckt.

9. Deckenstrahlplatten-Anordnung (10) nach Anspruch 7 oder 8, **dadurch gekennzeichnet, dass** die beiden parallelen Biegekanten (K1, K2) des dreidimensionalen Gebildes parallel zur grossen Hauptachse A1 des rechteckförmigen zentralen Bereichs (14a, 14b, 14c) verlaufen.

10. Deckenstrahlplatten-Anordnung (10) nach einem der Ansprüche 7 bis 9, **dadurch gekennzeichnet, dass** der rechteckförmige zentrale Bereich (14a, 14b, 14c) des Verbindungselements (14, 15) einen Brückenbereich (14a, 14b, 14c) enthält, welcher ein U-Profil mit einer Basis (14a) und zwei zueinander parallelen U-Profil-Schenkeln (14b, 14c) aufweist.

11. Deckenstrahlplatten-Anordnung (10) nach einem der Ansprüche 7 bis 10, **dadurch gekennzeichnet, dass** der erste U-Profil-Schenkel (14b) am ersten Ende des Brückenbereichs (14a, 14b, 14c) einen ersten Befestigungs-Schenkel (14d) aufweist und am zweiten Ende des Brückenbereichs (14a, 14b, 14c) einen zweiten Befestigungs-Schenkel (14e) aufweist, und dass der zweite U-Profil-Schenkel (14c) am zweiten Ende des Brückenbereichs (14a, 14b, 14c) einen dritten Befestigungs-Schenkel (14f) aufweist und am ersten Ende des Brückenbereichs (14a, 14b, 14c) einen vierten Befestigungs-Schenkel (14g) aufweist.

12. Deckenstrahlplatten-Anordnung (10) nach einem der Ansprüche 7 bis 11, **dadurch gekennzeichnet, dass** die vier Befestigungsschenkel (14d, 14e, 14f, 14g) jeweils ebene Gebilde sind, wobei der erste und der zweite Befestigungs-Schenkel (14d, 14e) in einer ersten Ebene liegen und der dritte und der vierte Befestigungs-Schenkel (14f, 14g) in einer zweiten Ebene liegen, welche zur ersten Ebene parallel verläuft.

13. Deckenstrahlplatten-Anordnung (10) nach einem der Ansprüche 7 bis 12,
**dadurch gekennzeichnet,**
**dass** Endbereiche des ersten und des vierten Befestigungsschenkels (14d, 14g) den ersten Eingriffsbereich (14E, 15E) für einen Eingriff mit einem zum ersten Eingriffsbereich komplementären Eingriffsbereich (11KE) der ersten Deckenstrahlplatte (11) enthalten;
**dass** Endbereiche des zweiten und des dritten Befestigungsschenkels (14e, 14f) den zweiten Eingriffsbereich (14F, 15F) für einen Eingriff mit einem zum zweiten Eingriffsbereich komplementären Eingriffsbereich (12KF) der zweiten Deckenstrahlplatte (12) enthalten; und
**dass** der Brückenbereich (14a, 14b, 14c) den dritten Eingriffsbereich (14G, 15G) für einen Eingriff mit einem zum dritten Eingriffsbereich komplementären Eingriffsbereich (13KG) des mindestens einen weiteren Funktionselements (13) enthält.

14. Deckenstrahlplatten-Anordnung (10) nach einem der Ansprüche 7 bis 13, **dadurch gekennzeichnet, dass** die ersten und die zweiten Eingriffsbereiche (14E, 15E, 14F, 15F) jeweils eine Aussparung (N) im jeweiligen Endbereich des Befestigungs-Schenkels (14d, 14e, 14f, 14g) haben, welche durch eine umbiegbare Lasche (M) geöffnet und geschlossen werden kann.

## Claims

1. Radiant ceiling panel arrangement (10) for mounting in the ceiling area of a room, said arrangement (10) comprising at least a first radiant ceiling panel (11) and a second radiant ceiling panel (12) for heating and/or cooling the room as well as at least one further functional element (13), said at least one further functional element (13) being arranged between said at least two radiant ceiling panels (11, 12),
wherein at least one connecting element (14, 15) holds the two radiant ceiling panels (11, 12) and the further functional element (13) together, **characterized in that** the two radiant ceiling panels (11, 12) and the further functional element (13) are rigidly connected by means of the at least one connecting element (14, 15).

2. Radiant ceiling panel arrangement (10) according to claim 1, **characterized in that** a first boundary region (G1) extends between the first radiant ceiling panel (11) and the functional element (13) and a second boundary region (G2) extends between the second radiant ceiling panel (12) and the functional element (13), the at least one connecting element (14, 15) extends in a bridge-like or clamp-like manner over the first boundary region (G1) and the second boundary region (G2), the arrangement (10) preferably having at least two connecting elements (14, 15) which are arranged at a distance from one another along the first boundary region (G1) and along the second boundary region (G2).

3. Radiant ceiling panel arrangement (10) according to any one of claims 1 to 2, **characterized in that** the connecting element (14, 15) comprises:
a first engagement portion (14E, 15E) for engagement with an engagement portion (11KE) of the first radiant ceiling panel (11) complementary to the first engagement portion;
a second engagement portion (14F, 15F) for engagement with an engagement portion (12KF) of the second radiant ceiling panel (12) complementary to the second engagement portion; and
a third engagement portion (14G, 15G) for engagement with an engagement portion (13KG) of the at least one further functional element (13) complementary to the third engagement portion.

4. Radiant ceiling panel arrangement (10) according to any one of claims 1 to 3, **characterized in that** the further functional element (13) comprises an elongated housing (H) having a longitudinal axis L3, preferably the elongated housing (H) having, at least in axial partial portions along its longitudinal axis L3, a cross-sectional shape whose outer boundary forms, at least in partial portions, the complementary engagement portion (13KG) of the at least one further functional element (13).

5. Radiant ceiling panel arrangement (10) according to one of claims 1 to 4, **characterized in that** each of the two radiant ceiling panels (11, 12) is an elongated structure having a longitudinal axis L1 respectively a longitudinal axis L2, , preferably the two elongated structures having, at least in axial partial portions along their respective longitudinal axis L1 respectively L2, a ledge or a fold (F), which extends parallel to the respective longitudinal axis L1 or L2, the ledge or the fold (F) having a cross-sectional shape whose outer boundary forms, at least in partial regions, the complementary engagement portion (11KE) of the first radiant ceiling panel (11) or the complementary engagement portion (12KF) of the second radiant ceiling panel (12).

6. Radiant ceiling panel arrangement (10) according to any one of claims 1 to 5, **characterized in that** a further functional element (13) includes a lighting element, in particular a gas discharge tube or light-emitting diodes, for illuminating the room; and/or **in that** a further functional element (13) includes a duct element for transporting air; and/or **in that** a further functional element (13) includes a filter element for filtering air.

7. Radiant ceiling panel arrangement (10) according to any one of claims 1 to 6, **characterized in that** the at least one connecting element (14, 15) is formed from a metal sheet by stamping out or cutting out a one-piece resp. coherent two-dimensional sheet metal cutout (14a, 14b, 14c, 14d, 14e, 14f, 14g) from a metal sheet and subsequently bending the sheet metal cutout into a three-dimensional structure (14a, 14b, 14c, 14d, 14e, 14f, 14g) with two bending edges (K1, K2) parallel to each other.

8. Radiant ceiling panel arrangement (10) according to claim 7, **characterized in that** the two-dimensional sheet metal cutout has an approximately rectangular central region (14a, 14b, 14c), from each of which, starting from one of the four corner regions of the rectangular central region, a respective anchoring section (14d, 14e, 14f, 14g) extends away inclined to the major axes A1, A2 of the rectangular central region (14a, 14b, 14c).

9. Radiant ceiling panel arrangement (10) according to claim 7 or 8, **characterized in that** the two parallel bending edges (K1, K2) of the three-dimensional structure extend parallel to the major axis A1 of the rectangular central region (14a, 14b, 14c).

10. Radiant ceiling panel arrangement (10) according to any one of claims 7 to 9, **characterized in that** the rectangular central region (14a, 14b, 14c) of the connecting element (14, 15) includes a bridge region (14a, 14b, 14c) which has a U-profile with a base (14a) and two mutually parallel U-profile legs (14b, 14c).

11. Radiant ceiling panel arrangement (10) according to any one of claims 7 to 10, **characterized in that** the first U-section leg (14b) comprises a first anchoring section (14d) at the first end of the bridge region (14a, 14b, 14c) and a second anchoring section (14d) at the second end of the bridge region (14a, 14b, 14c), and **in that** the second channel section leg (14c) has a third anchoring section (14f) at the second end of the bridge region (14a, 14b, 14c) and a fourth anchoring section (14g) at the first end of the bridge region (14a, 14b, 14c).

12. Radiant ceiling panel arrangement (10) according to any one of claims 7 to 11, **characterized in that** the four anchoring sections (14d, 14e, 14f, 14g) are each planar structures, the first and second anchoring sections (14d, 14e) lying in a first plane and the third and fourth anchoring sections (14f, 14g) lying in a second plane which is parallel to the first plane.

13. Radiant ceiling panel arrangement (10) according to any one of claims 7 to 12, **characterized in that**,
end portions of the first and the fourth anchoring sections (14d, 14g) include the first engagement portion (14E, 15E) for engagement with an engagement portion (11KE) of the first radiant ceiling panel (11) complementary to the first engagement portion;
end portions of said second and third anchoring sections (14e, 14f) include said second engagement portion (14F, 15F) for engagement with an engagement portion (12KF) of said second radiant ceiling panel (12) that is complementary to said second engagement portion; and
that the bridge region (14a, 14b, 14c) includes the third engagement portion (14G, 15G) for engagement with an engagement portion (13KG) of the at least one further functional element (13) complementary to the third engagement portion.

14. Radiant ceiling panel arrangement (10) according to any one of claims 7 to 13, **characterized in that** said first and second engagement portions (14E, 15E, 14F, 15F) each have a recess (N) in the respective end portion of the anchoring section (14d, 14e, 14f, 14g) which can be opened and closed by a bendable connection link (M).

## Revendications

1. Arrangement de panneaux radiants de plafond (10) destiné à être placé dans la zone de plafond d'une pièce, l'arrangement (10) comprenant au moins un premier panneau radiant de plafond (11) et un deuxième panneau radiant de plafond (12) pour chauffer et/ou refroidir la pièce, ainsi qu'au moins un autre élément fonctionnel (13), ledit au moins un autre élément fonctionnel (13) étant disposé entre lesdits au moins deux panneaux radiants de plafond (11, 12),
au moins un élément de liaison (14, 15) tenant ensemble les deux panneaux radiants de plafond (11, 12) et l'autre élément fonctionnel (13), **caractérisé en ce que** les deux panneaux radiants de plafond (11, 12) et l'autre élément fonctionnel (13) sont reliés de manière rigide au moyen de l'au moins un élément de liaison (14, 15).

2. Arrangement de panneaux radiants de plafond (10) selon la revendication 1, **caractérisé en ce qu'**une première zone limite (G1) s'étend entre le premier panneau radiant de plafond (11) et l'élément fonctionnel (13) et une deuxième zone limite (G2) s'étend entre le deuxième panneau radiant de plafond (12) et l'élément fonctionnel (13), l'au moins un élément de liaison (14, 15) s'étend à la manière d'un pont ou d'une pince sur la première zone limite (G1) et la deuxième zone limite (G2), l'arrangement (10) présentant de préférence au moins deux éléments de liaison (14, 15) qui sont disposés à distance l'un de l'autre le long de la première zone limite (G1) et le long de la deuxième zone limite (G2).

3. Arrangement de panneaux radiants de plafond (10) selon l'une des revendications 1 à 2, **caractérisé en ce que** l'élément de liaison (14, 15) comprend :
une première zone d'engagement (14E, 15E) pour un engagement avec une zone d'engagement (11KE) du premier panneau radiant de plafond (11) complémentaire à la première zone d'engagement ;
une deuxième partie d'engagement (14F, 15F) pour un engagement avec une partie d'engagement (12KF) du deuxième panneau radiant de plafond (12) complémentaire à la deuxième partie d'engagement ; et
une troisième zone d'engagement (14G, 15G) pour un engagement avec une zone d'engagement (13KG), complémentaire à la troisième zone d'engagement, d'au moins un autre élément fonctionnel (13).

4. Arrangement de panneaux radiants de plafond (10) selon l'une des revendications 1 à 3, **caractérisé en ce que** l'autre élément fonctionnel (13) présente un boîtier allongé (H) avec un axe longitudinal L3, le boîtier allongé (H) ayant de préférence, au moins dans des zones partielles axiales le long de son axe longitudinal L3, une forme en section transversale dont la délimitation extérieure forme, au moins dans des zones partielles, la zone d'engagement complémentaire (13KG) de l'au moins un autre élément fonctionnel (13).

5. Arrangement de panneaux radiants de plafond (10) selon l'une des revendications 1 à 4, **caractérisé en ce que** chacun des deux panneaux radiants de plafond (11, 12) est une structure allongée avec un axe longitudinal L1, respectivement un axe longitudinal L2, les deux structures allongées présentant de préférence, au moins dans des zones partielles axiales le long de leur axe longitudinal respectif L1, respectivement L2, un liston ou une feuillure (F), qui, respectivement, s'étend parallèlement à l'axe longitudinal respectif L1 ou L2, le liston ou la feuillure (F) ayant une forme de section transversale dont la délimitation extérieure forme, au moins dans des zones partielles, la zone d'engagement complémentaire (11KE) du premier panneau radiant de plafond (11) ou la zone d'engagement complémentaire (12KF) du deuxième panneau radiant de plafond (12).

6. Arrangement de panneaux radiants de plafond (10) selon l'une des revendications 1 à 5, **caractérisé en ce qu'**un autre élément fonctionnel (13) contient un élément lumineux, en particulier un tube à décharge de gaz ou des diodes électroluminescentes, pour éclairer la pièce ; et/ou **en ce qu'**un autre élément fonctionnel (13) contient un élément de canal pour le transport de l'air ; et/ou **en ce qu'**un autre élément fonctionnel (13) contient un élément de filtre pour filtrer l'air.

7. Arrangement de panneaux radiants de plafond (10) selon l'une des revendications 1 à 6, **caractérisé en ce que** l'au moins un élément de liaison (14, 15) est fabriqué à partir d'une tôle par poinçonnage ou découpage d'une la découpe en tôle bidimensionnel d'une seule pièce resp. cohérente (14a, 14b, 14c, 14d, 14e, 14f, 14g) dans la tôle, puis pliage de la découpe en tôle pour former une structure tridimensionnelle (14a, 14b, 14c, 14d, 14e, 14f, 14g) avec deux arêtes de pliage (K1, K2) parallèles entre elles.

8. Arrangement de panneaux radiants de plafond (10) selon la revendication 7, **caractérisé en ce que** la découpe en tôle bidimensionnelle présente une zone centrale (14a, 14b, 14c) à peu près rectangulaire, à partir de laquelle s'étend respectivement, en partant de l'une des quatre zones de coin de la zone centrale rectangulaire, une branche de fixation (14d, 14e, 14f, 14g) en biais par rapport aux axes principaux A1, A2 de la zone centrale rectangulaire (14a, 14b, 14c).

9. Arrangement de panneaux radiants de plafond (10) selon la revendication 7 ou 8, **caractérisé en ce que** les deux arêtes de pliage parallèles (K1, K2) de la structure tridimensionnelle s'étendent parallèlement au grand axe principal A1 de la zone centrale rectangulaire (14a, 14b, 14c).

10. Arrangement de panneaux radiants de plafond (10) selon l'une quelconque des revendications 7 à 9, **caractérisé en ce que** la zone centrale rectangulaire (14a, 14b, 14c) de l'élément de liaison (14, 15) comprend une zone de pont (14a, 14b, 14c) qui présente un profilé en U avec une base (14a) et deux branches de profilé en U (14b, 14c) parallèles entre elles.

11. Arrangement de panneaux radiants de plafond (10) selon l'une quelconque des revendications 7 à 10, **caractérisé en ce que** la première branche de profilé en U (14b) comprend une première branche de fixation (14d) à la première extrémité de la zone de pont (14a, 14b, 14c) et une seconde branche de fixation (14b) à la seconde extrémité de la zone de pont (14a, 14b, 14c) présente une deuxième branche de fixation (14e), et **en ce que** la deuxième branche de profilé en U (14c) présente une troisième branche de fixation (14f) à la deuxième extrémité de la zone de pont (14a, 14b, 14c) et présente une quatrième branche de fixation (14g) à la première extrémité de la zone de pont (14a, 14b, 14c).

12. Arrangement de panneaux radiants de plafond (10) selon l'une des revendications 7 à 11, **caractérisé en ce que** les quatre branches de fixation (14d, 14e, 14f, 14g) sont respectivement des formations planes, la première et la deuxième branche de fixation (14d, 14e) étant situées dans un premier plan et la troisième et la quatrième branche de fixation (14f, 14g) étant situées dans un deuxième plan qui est parallèle au premier plan.

13. Arrangement de panneaux radiants de plafond (10) selon l'une des revendications 7 à 12, **caractérisé en ce que** ,
**en ce que** des zones d'extrémité de la première et de la quatrième branche de fixation (14d, 14g) comprennent la première zone d'engagement (14E, 15E) pour un engagement avec une zone d'engagement (11 KE), complémentaire à la première zone d'engagement, du premier panneau radiant de plafond (11) ;
**en ce que** des parties d'extrémité de la deuxième et de la troisième branche de fixation (14e, 14f) comprennent la deuxième partie d'engagement (14F, 15F) pour un engagement avec une partie d'engagement (12KF) complémentaire à la deuxième partie d'engagement du deuxième panneau radiant de plafond (12) ; et
**en ce que** la zone de pont (14a, 14b, 14c) comprend la troisième zone d'engagement (14G, 15G) pour un engagement avec une zone d'engagement (13KG) complémentaire à la troisième zone d'engagement de l'au moins un autre élément fonctionnel (13).

14. Arrangement de panneaux radiants de plafond (10) selon l'une quelconque des revendications 7 à 13, **caractérisé en ce que** les première et deuxième zones d'engagement (14E, 15E, 14F, 15F) comportent chacune un évidement (N) dans la zone d'extrémité respective de la branche de fixation (14d, 14e, 14f, 14g), qui peut être ouvert et fermé par une patte repliable (M).
